# EUROPÄISCHE PATENTANMELDUNG

(11) **EP 3 753 397 A1**
(43) Veröffentlichungstag der Anmeldung: **23.12.2020**
(21) Anmeldenummer: 20181098.3
(22) Anmeldetag: 19.06.2020
(51) Int. Cl.: A01G 7/02, A01G 7/04, A01G 31/00

(54) **SYSTEM UND VERFAHREN ZUR KULTIVIERUNG EINES PFLANZENBESTANDES**

(30) Priorität: 20.06.2019 DE 102019209014
(71) Anmelder: GND Solutions, 13509 Berlin (DE)
(72) Erfinder: Arnold, Oliver, 13053 Berlin (DE); von Studzinski, Christoph, 10783 Berlin (DE)
(74) Vertreter: Maikowski & Ninnemann Patentanwälte Partnerschaft mbB

(57) **Zusammenfassung**

Die vorliegende Erfindung betrifft ein Kultivierungssystem (10) für einen Pflanzenbestand umfassend mindestens ein LED-Beleuchtungssystem (11) umfassend Breitband-LEDs zur Emission von Sonnenlicht im photosynthetischen Bereich mit einer Wellenlänge zwischen 400-700 nm; mindestens ein Anbausystem (12) umfassend mindestens einen Anbautisch (13) und einem an dem Anbautisch (13) angeordneten Ständersystem (14), wobei das LED-Beleuchtungssystem (11) oberhalb des Anbautisches (13) an dem Ständersystem (14) befestigt ist, mindestens eine regelbare Luftstromeinrichtung zur Steuerung einer Luftstromzufuhr zur An- und Durchströmung des Pflanzenbestandes, und mindestens ein Sensorsystem (16) zur Bestimmung von pflanzenphysiologischen Parametern des Pflanzenbestandes.

## Beschreibung

Die vorliegende Erfindung betrifft ein Kultivierungssystem für Pflanzen eines Pflanzenbestandes und ein Verfahren zur Kultivierung eines Pflanzenbestandes unter Verwendung des Kultivierungssystems.

### Beschreibung

Kultursysteme für Pflanzen sind häufig als Kulturtische oder Kulturregale ausgelegt. Kulturtische üblicher Bauart weisen eine Bodenplatte, zwei oder mehrere Seitenteile auf, die auch der Aufnahme von Bewässerungseinrichtungen dienen können. Im einfachsten Fall bestehen sie im Wesentlichen aus der Tischplatte, die der Aufstellung der Pflanzen dient. Die Kulturfläche in Kulturregalen entsteht durch waagerechte Böden, die in ein vertikales Gestänge eingehängt, vernietet oder verschraubt sind.

Eine Beeinflussung der Transpirationsleistung der auf bzw. in diesen Systemen kultivierten Pflanzen ist in den genannten Anwendungsfällen nicht vorgesehen und lässt sich mit den bestehenden Anbausystemen nicht realisieren.

Nur durch äußerliche Einwirkung auf die Pflanzen kann auf die Transpiration Einfluss genommen werden. Verwendung finden hier vor allem thermische Konvektion und/oder erzwungene Luftbewegung, wie von Ventilatoren erzeugte Luftströme. Während thermische Konvektion nicht in der Lage ist, den um die Blätter durch Transpiration entstehenden laminar anliegen Dampfmantel aufzulösen, ist dies durch den Einsatz von Ventilatoren zwar möglich, hierbei werden allerdings inhomogene Bedingungen verschiedener Luftgeschwindigkeiten geschaffen, so dass ein Pflanzenbestand in unterschiedliche Transpirationszustände versetzt wird und keine homogenen Bedingungen mehr vorliegen. Ziel muss eine homogene Transpirationsleistung der zu kultivierenden Pflanzen sein, um einen homogenen gesunden Pflanzenbestand zu erzielen.

Die Kultivierung von Pflanzen in geschlossenen Umgebungen unter Ausschluss des Tageslichts gewinnt an Bedeutung. Das Tageslicht wird dabei durch künstliche Beleuchtungen unterschiedlicher technischer Lösungen ersetzt. Durch den Ausschluss des Tageslichts ist eine Klimatisierung der Kulturräumlichkeiten möglich und eine bessere Kontrolle der Wachstumsfaktoren wird möglich. Hierdurch lassen sich verbesserte quantitative und qualitative Ergebnisse der pflanzlichen Produktion erreichen, so dass der geschlossene Anbau vor allem für Pflanzen mit hohem Deckungsbeitrag immer relevanter wird.

Aus dem Stand der Technik sind verschiedene Ansätze zur künstlichen Beleuchtung von Pflanzen bekannt. So wird in der WO 2014/069849 A1 eine Kultivierungsvorrichtung mit einer künstlichen Lichtquelle beschrieben, in der das Pflanzenwachstum zusätzlich durch Zufuhr von Sauerstoff an die Wurzeln und Besprühen mit Pflanzennährstoffen unterstützt wird. In der EP 2 644 020 A1 wird eine LED-Vorrichtung zur Pflanzenkultivierung offenbart, wobei die LED-Vorrichtung einen blauen LED-Chip in Kombination mit roten Phosphor umfasst.

Zwar ermöglichen die bekannten Kultivierungssysteme eine Verbesserung des Pflanzenwachstums, jedoch werden die wechselseitigen Einflüsse von Lichtintensität auf die Photosynthese und stressbedingte pflanzenphysiologische Reaktion auf die Transpiration der Pflanzen nicht oder nur unzureichend berücksichtigt.

Die Aufgabe der vorliegenden Erfindung besteht daher darin, ein Kultvierungssystem für Pflanzen bereitzustellen, das eine gezielte Einstellung der optimalen Transpirations- und Photosyntheserate ermöglicht.

Diese Aufgabe wird mit einem Kultivierungssystem mit den Merkmalen des Anspruchs 1 und einem Kultivierungsverfahren unter Verwendung dieses Systems mit den Merkmalen des Anspruchs 14 gelöst.

Entsprechend wird ein Kultivierungssystem für einen Pflanzenbestand bereitgestellt, welches folgende Merkmale umfasst
- mindestens ein LED Beleuchtungssystem umfassend Breitband-LEDs zur Emission von Sonnenlicht im photosynthetischen Bereich mit einer Wellenlänge zwischen 400-700 nm;
- mindestens ein Anbausystem umfassend mindestens einen Anbautisch und einem an dem Anbautisch angeordneten Ständersystem, wobei das LED Beleuchtungssystem oberhalb des Anbautisches an dem Ständersystem befestigt ist,
- mindestens eine regelbare Luftstromeinrichtung zur Steuerung einer Luftstromzufuhr zur An- und Durchströmung des Pflanzenbestandes, und
- mindestens ein Sensorsystem zur Bestimmung von pflanzenphysiologischen Parametern des Pflanzenbestandes.

Es wird demnach ein Kultivierungssystem für Pflanzen bereitgestellt, welches durch die Kombination von LED-Beleuchtung, regelbare Luftstromeinrichtung und Sensorsystem an einem dafür geeigneten Anbausystem eine gezielte Steuerung von Pflanzentranspiration und Pflanzenwachstum ermöglicht. Insbesondere ist es mit dem vorliegenden Kultivierungssystem möglich, die Transpiration der Pflanzen gezielt einzustellen.

Sollen Pflanzen unter photosynthetisch aktiven Lichtintensitäten (PAR-Strahlung zwischen 400 - 700 nm) kultiviert werden, um eine hohe Photosyntheserate zu erreichen und damit die Wachstumsrate zu erhöhen; und sollen darüber hinaus, mittels zusätzlicher Wellenlängen, im UV-Bereich zwischen 265 - 400 nm sowie im IR-Bereich zwischen 700 - 900 nm, lichtinduzierte Eustress-Reaktionen (positiver Stress) ausgelöst werden, bspw. zwecks gezielter Sekundärmetabolit-Anreicherung in den Pflanzen, der Erzielung morphologischer Veränderungen oder anderer eustressbedingter physiologischer Reaktionen des pflanzlichen Organismus, muss ein Disstress durch verringerte Transpiration (bedingt durch Schließen der pflanzlichen Stomata) sicher verhindert werden.

Ein Schließen der Stomata führt zu einer verringerten Transpiration und in der Folge zu einer reduzierten Aufnahme gasförmigen Kohlenstoffdioxids aus der Luft und Mineralstoffen aus der Nährlösung, die Photosyntheserate sinkt in der Folge und mit ihr die Assimilationsleistung der Pflanze. Aufrechterhalten wird die pflanzliche Transpiration durch Sicherstellung der optimalen, pflanzartspezifischen Blatt-Luft-Dampfdruckdifferenz (fortlaufend abgekürzt als BLD).

Pflanzen schließen bei einer zu niedrigen oder zu hohen BLD Ihre Stomata, die Spaltöffnungen zur Regulierung der Transpiration, um Ihren Wasserhaushalt und damit die Hydraulik ihres Stofftransports zu regulieren. In Abhängigkeit vom morphologischen Aufbau des Blattes kann es notwendig sein, die Luft um das Blatt zu bewegen.

Hintergrund ist, die sich zunächst in unmittelbarer Nähe des Blattes, verändernde BLD. Es bildet sich eine laminar am Blatt anliegende Grenzschicht, die als erstes eine Abnahme der BLD durch Wasserdampfsättigung erfährt und damit transpirationswirksam wird. Diese laminar am Blatt anliegende Grenzschicht ist maßgeblich für die Regulierung der Transpiration der Pflanze und wirkt sich direkt auf den Öffnungszustand der Stomata aus. Durch diesen biologischen Regelprozess kommt es zusätzlich häufig zu einer Kohlenstoffdioxid-Unterversorgung der Photosynthese-Prozesse im Blatt, dem mit einem gezielten Abblasen der Grenzschicht mit durch Klimatisierung BLD-optimierter und CO₂-angereicherter Luft permanent entgegengewirkt werden soll.

Mit dem vorliegenden Kultivierungssystem ist es nunmehr möglich, die Blatt-Luft-Dampfdruckdifferenz dieser Grenzschicht zu messen und zu beeinflussen. Einfluss genommen wird auf die Grenzschicht mittels Abblasen, der Klimatisierung der Luft und der Anreicherung dieser mit gasförmigem Kohlenstoffdioxid. Die diverse Morphologie der pflanzlichen Blätter, die arten- und phänotypisch variiert, bedingt unterschiedliche Luftstromgeschwindigkeiten, welche zwischen 0,3 m/s und 5 m/s betragen können, ohne, dass ein Schließen der Stomata erreicht wird. Eine zu hohe Luftstromgeschwindigkeit kann ebenso zum Schließen der Stomata führen und damit zu einer Einschränkung der Transpiration. Es ist deshalb unabdingbar die Luftstromgeschwindigkeit zu steuern und an die Morphologie und den Phänotyp der Pflanze anzupassen.

Eine Vermeidung von Disstress wird darüber hinaus durch parallele Steuerung der Lichtintensität erreicht. Sollte durch die verwendeten Sensoren eine Abweichung vom Optimum der BLD, des CO2-Gehalts oder anderer pflanzenphysiologischer Parameter festgestellt werden, kann durch die Reduktion der Lichtintensität sowohl der photosynthetisch aktiven Strahlung als auch der UV- bzw. IR-Strahlung, ein Lichtstress sicher vermieden werden. Insbesondere bei C3-Pflanzen ist die physiologisch stressfreie Adaption an eine photosynthetisch aktive Einstrahlung oberhalb von 500 bis 1500 µmol/m²/S und darüber direkt an das Vorliegen einer störungsfreien Transpiration und der Versorgung mit ausreichend CO₂ abhängig.

In einer Ausführungsform des vorliegenden Kultivierungssystems erzeugt das mindestens eine LED-Beleuchtungssystem ein homogenes hochintensives photosynthetisch aktives Licht mit einer photosynthetisch aktiven Photonenflussdichte (PPFD) von mehr als 2500 µmol/m²/S.

Photosynthese aktives Licht zwischen 400 - 700 nm Wellenlänge ist der wichtigste Wachstumsfaktor für Pflanzen. Ein Optimum an Assimilation wird nur dann erzielt, wenn die zu kultivierenden Pflanzen in ihr assimilatorisches Optimum versetzt werden. Das Optimum beruht auf der richtigen Intensität und Homogenität der einfallenden photosynthetisch aktiven Strahlung.

Das im vorliegenden Kultivierungssystem verwendete Beleuchtungssystem bewirkt, dass die kultivierten Pflanzen, einem homogenen hochintensiven photosynthetisch aktiven Licht ausgesetzt werden können. Dabei können Intensitäten von mehr als 2500 µmol/m²/S photosynthetisch aktiver Photonenflussdichte (PPFD) erreicht werden. Um die Photosynthese im Optimum zu halten bedarf es einer ausreichend starken photosynthetisch aktiven Photonenflussdichte, die in ihrer Intensität regelbar ist, um an unterschiedliche physiologische Ansprüche und Kulturziele adaptiert werden zu können.

Mit dem vorliegenden LED-Beleuchtungssystem ist des demnach möglich hohe Photonenflussdichten zu erreichen, wobei diese bevorzugt auch mittels Dimmen reduziert werden können. Auf diese Weise wird eine höhere Lebensdauer der LEDs erreicht, die fernab der maximalen Leistung des LED-Beleuchtungssystem betrieben werden können und dennoch eine hohe Photonenflussdichte erreichen können. Hierdurch kann u.a. die Kühlleistung im Betrieb reduziert werden. Des Weiteren werden Photonenflussdichten erreicht, die auch in wässrigen Lösung befindliche Kulturen, wie Algen, kultivierbar machen.

Bisherige Lösungen erreichen die maximal zu erzielenden photosynthetisch aktiven Photonenflussdichten nicht, und verfügen über keine weiteren Wellenlängenbereiche, wie UV- und IR-Wellenlängen, die sicherstellen, dass weitere Chromatophore in der Pflanze gezielt angesprochen werden können, um bspw. Anreicherungsprozesse zu initialisieren.

In einer Ausführungsform des vorliegenden Kultivierungssystems umfasst das LED-Beleuchtungssystem mindestens ein LED-Modul, bevorzugt mindestens zwei oder mehrere parallel zueinander verlaufende LED-Module. Zudem ist jedes LED-Modul an horizontal verlaufenden Balken des Ständersystems befestigt. Jedes LED-Modul umfasst wiederum mehrere in Reihe angeordnete LEDs. Zur Verwendung kommt somit ein LED-Beleuchtungssystem, das durch seinen linearen Aufbau eine homogene Ausleuchtung der darunterliegenden Anbaufläche ermöglicht.

Es ist weiterhin vorgesehen, dass das mindestens eine LED-Beleuchtungssystem zusätzliche LEDs zur Emission von UV-Licht mit einer Wellenlänge zwischen 265 - 400 nm aufweist. Auch ist vorgesehen, dass das mindestens eine LED-Beleuchtungssystem zusätzliche LEDs zur Emission von IR-Licht mit einer Wellenlänge zwischen 700-900 nm aufweist.

Wesentlich ist die Verwendung von hochleistungsfähigen LEDs, die als Breitband-LEDs das Sonnenlicht im photosynthetischen Bereich zwischen 400-700 nm Wellenlänge emittieren und darüber hinaus mit LEDs für verschiedenen Stressbehandlungen ausgestattet sind. Dies können LEDs im UV-Bereich zwischen 265 - 400 nm sowie im IR-Bereich zwischen 700 - 900 nm sein. Auf diese Weise wird sichergestellt, dass eine lichtstressinduzierte Anpassung des pflanzlichen Organismus auch von oben möglich wird. Ergänzt wird dieses System zur Lichtstressinduktion durch eine variable Bestandsbeleuchtung, die weiter unten beschrieben ist.

In einer weiteren Ausführungsform des vorliegenden Kultivierungssystems ist vorgesehen, dass das LED-Beleuchtungssystem mit mindestens einem Kühlsystem, bevorzugt einem wassergekühlten System, verbunden ist.

Besonders wichtig ist die Reduktion des Wärmeeinflusses der Beleuchtung sowohl auf den Pflanzenbestand als auch auf die nach den Sensordaten klimatisierten verwendeten Luftströme zur Durchblasung des Pflanzenbestands, es kommen deshalb wassergekühlte Lampensysteme zum Einsatz, so dass es zu keinen oder stark reduzierten Wärmeeinträgen in die vorbeiströmende klimatisierte Luft kommt. Darüber hinaus wird die Lebensdauer der verwendeten LEDs verbessert, die in einem Temperaturoptimum gehalten, einer verringerten Degradation unterworfen sind.

Wie oben bereits angedeutet, ist das LED-Beleuchtungssystem in ein Anbausystem integriert, welches mindestens einen Anbautisch und einem an dem Anbautisch angeordneten Ständersystem umfasst. Insbesondere ist das LED-Beleuchtungssystem oberhalb des Anbautisches an dem Ständersystem befestigt.

Das Ständersystem kann aus mindestens vier vertikal verlaufenden Balken bestehen, die bevorzugt jeweils an den Ecken des (rechtwinkligen) Anbautisches befestigt sind. Das Ständersystem weist zudem mindestens zwei, bevorzugt vier oberhalb des Anbautisches horizontal verlaufende Balken auf, wobei die horizontal verlaufenden Balken jeweils mit den vertikal verlaufenden Balken verbunden sind.

Das LED-Beleuchtungssystem ist oberhalb des Anbautisches an den horizontal verlaufenden Balken des Ständersystems befestigt. Insbesondere sind die parallel zueinander verlaufenden LED-Module jeweils an den horizontal verlaufenden Balken des Ständersystems befestigt.

In einer weiteren Ausführungsform des vorliegenden Kultivierungssystems ist - neben der oben beschriebenen horizontalen LED-Beleuchtung - eine vertikale LED-Beleuchtung vorgesehen. Diese zusätzliche vertikale LED-Beleuchtung ist reversibel auf dem Anbausystem anbringbar, z.B. mittig auf der Tischplatte des Anbausystems. Die vertikale LED-Beleuchtung kann z.B. in Form eines LED-Rundstrahlers ausgebildet sein und kann unabhängig von der horizontalen LED (System)beleuchtung gesteuert werden.

Durch die zusätzliche LED-Beleuchtung ist es möglich, einer Aufkahlung des Pflanzenbestandes entgegenzuwirken. Dichtere Pflanzenbestände neigen zum Aufkahlen, d.h. die durch das Wachstum der Pflanzen unteren Blattpartien, werden durch das Wachstum oberer Partien immer stärker beschattet, so dass diese beschatteten Teile ihre Funktion verlieren und von der Pflanze aufgegeben werden. In der Folge kahlt die Pflanze von unten auf, es kommt zum Laubwurf. Mit einer vertikalen LED-Beleuchtung wird dieser Prozess reduziert oder unterbunden, da die unteren Partien, der auf dem Anbausystem stehenden Pflanzen, mit photosynthetisch aktivem Licht bestrahlt werden.

Die vertikalen LED-Lampensysteme sind hierzu vertikal, reversibel auf dem Anbausystem anbringbar. Die runde diffuse Formgebung des umhüllenden Schutzmaterials sorgt dabei für eine homogene Ausleuchtung der direkten Umgebung der vertikalen LED-Rundstrahler. Die mittige Anbringung der LED-Bestandsleuchten sorgt für eine optimale Ausleuchtung des inneren Pflanzenbestands und unterer Blattpartien.

Die für die vertikale LED-Beleuchtung verwendeten Wellenlängen entsprechen der photosynthetischen Strahlung zwischen 400 - 700 nm und können darüber hinaus auch UV-emittierende LEDs enthalten. Letztere Funktion kann gezielt angesteuert werden und erlaubt das Auslösen einer Anreicherungsreaktion mit Sekundärmetaboliten der Pflanzen durch UV-Strahlung als Stressor. Ab beginnender Beschattung unterer Blattpartien kann die vertikale Bestandsbeleuchtung installiert werden, um die negativen Effekte, die mit einer Beschattung einhergehen auszugleichen. Die vertikale Bestandsbeleuchtung wird durch die Software steuerbar und lässt sich dimmen, es lassen sich verschiedene Tagesverläufe programmieren.

Wie oben bereits angemerkt, weist das vorliegende Kultivierungssystem mindestens eine regelbare Luftstromeinrichtung zur Steuerung einer Luftstromzufuhr zur An- und Durchströmung des Pflanzenbestandes auf.

Das Mittel zur Zufuhr des Luftstromes ist entlang von mindestens einem Abschnitt des Anbautisches vorgesehen, der bevorzugt parallel zu mindesten einem Abschnitt verläuft, in welchem der Pflanzenbestand angeordnet ist; d.h. das Mittel zur Luftstromzufuhr verläuft parallel zu den Pflanzenbehältern. In einer Ausführungsform erfolgt die Luftstromzufuhr durch auf bzw. im Anbautisch vorgesehene Öffnungen (Lochbereich), die als Luftführungsmittel dienen. Der Luftstrom wird vertikal durch bzw. entlang des Pflanzenbestandes, weg von der Tischplatte nach oben geführt, so dass eine homogene An- und Durchströmung der Pflanzenblätter ermöglicht wird. Die Luftstromstärke wird durch regelbare Lüfter gesteuert, wobei die Luftstromgeschwindigkeit in einem Bereich von 0,3 - 5 m/s liegt. Die regelbaren Lüfter realisieren eine steuerbare Luftstromstärke, die sich mittels des Luftführungsmittels ausrichten lässt.

In einer weiteren Ausführungsform des vorliegenden Kultivierungssystems sind des Weiteren mindestens ein Mittel zur Steuerung der Luftstromstärke, mindestens ein Mittel zur Einstellung der relativen Luftfeuchte des Luftstromes und/oder mindestens ein Mittel zur Anreicherung des Luftstromes mit gasförmigen Kohlendioxid vorgesehen.

Durch die Klimatisierung des Luftstromes wird die Transpirationsleistung in einem physiologischen Optimum gehalten. Der Luftstrom verfügt so über ein pflanzenphysiologisch geeignetes Wasserdampfsättigungsdefizit und eine geeignete Temperatur zur Einstellung der optimalen Blatt-Luft-Dampfdruckdifferenz (BLD). Das zu erzielende Wasserdampfdruckdefizit ist abhängig von der zu kultivierten Pflanzenspezies (bspw. C3- oder C4-Pflanze), der Morphologie (Habitus), dem Phänotyp (vegetative oder generative Phase), der Temperatur, der Lichtintensität und dem Ernährungsstatus der Pflanze. Es ist daher erstrebenswert, die für die Durchströmung des Pflanzenbestands benötigte Luft, zuvor zu temperieren und die richtige relative Luftfeuchte herzustellen (optimales Wasserdampfdruckdefizit).

Die Anreicherung des Luftstroms mit gasförmigem Kohlenstoffdioxid ermöglicht die optimale Versorgung der Assimilationsprozesse mit anorganischem Kohlenstoffdioxid.

Die zu erzielende Luftstromgeschwindigkeit wird regelungstechnisch an die in Blattnähe herrschende Blatt-Luft-Dampfdruckdifferenz gebunden, die mittels der Sensorgruppe einfach oder mehrfach auf dem Anbausystem in Blattnähe ermittelt wird; wie weiter unten noch beschrieben wird. Fällt die Blatt-Luft-Dampfdruckdifferenz in Blattnähe unter einen definierbaren Wert, wird mittels eines verstärkten Luftstroms, das benötigte Defizit am Blatt wiederhergestellt und die Transpirationsleistung steigt. Wird die optimale Blatt-Luft-Dampfdruckdifferenz überschritten, wird die Luftstromgeschwindigkeit reduziert eine zusätzliche Wasserdampferhöhung und geeignete Temperierung der eingeblasenen Luft erlaubt, die Blatt-Luft-Dampfdruckdifferenz im Pflanzenbestand wird reduziert.

Auch können Mittel zur Reinigung des Luftstroms, z.B. mittels Filtration, UV- und/oder Plasma-Desinfektion vorgesehen sein. Die Zuluft wird so vor jedem Pflanzenbestandsdurchlauf gereinigt und von Partikeln und Pathogenen befreit.

In einer weiteren Ausführungsform des vorliegenden Kultivierungssystems ist oberhalb des Pflanzenbestandes mindestens ein Mittel zum Absaugen des durch den Pflanzenbestand geleitenden Luftstroms vorgesehen. Die Absaugung wird dabei abhängig von der Lüfterleistung eingestellt. Die lüfterleistungsabhängige Absaugung sichert eine Zufuhr der verbrauchten Luft an eine geeignete Klimatisierungs- und Desinfektionsanlage, um deren Wiederverwendung zu ermöglichen. Dabei kann sowohl das Flächengebläse, als auch die Absaugung, sowohl unterhalb als auch oberhalb des Pflanzenbestands installiert werden.

Das vorliegende Anbausystem ermöglicht die Beeinflussung der pflanzlichen Transpiration im Bestand und an der Einzelpflanze in homogener Weise. Mit der Erfindung wird erreicht, dass die Transpirationsleistung der Pflanzen direkt beeinflusst werden kann, ohne andere Kulturmaßnahmen einzuschränken. Die Bedienbarkeit der beschriebenen konventionellen Anbausysteme bleibt erhalten. Das Anbausystem entspricht konstruktiv einem Anbautisch, der sich aufgrund seiner Konstruktion auch mehretagig nutzen lässt.

Durch die homogene An- und Durchströmung der Blätter, der auf dem Anbausystem stehenden Pflanzen, kann der laminar an den Blättern der Pflanze anliegende Wasserdampfmantel abgeblasen werden und die Transpiration zusätzlich durch Temperatur und Luftfeuchtigkeit der verwendeten Luft direkt beeinflusst werden. Eine Blatttrocknung, die hydraulische Begrenzung der Transpiration und ein übermäßiges negatives Wasserpotenzial werden durch die Aufrechterhaltung des optimalen Wasserhaushalts effektiv verhindert.

Wie bereits benannt, umfasst das vorliegende Kultivierungssystem mindestens ein Sensorsystem zur Bestimmung von pflanzenphysiologischen Parametern des Pflanzenbestandes.

In einer Ausführungsform umfasst das mindestens einfache Sensorsystem mindestens ein Sensor zur Bestimmung der Blatttemperatur mit mindestens einem Mittel zur Aufnahme von mindestens einem Pflanzenblatt, mindestens ein Lufttemperatursensor, mindestens ein Luftfeuchtesensor und/oder mindestens einem Anemometer zur Messung der Strömungsgeschwindigkeit des Luftstroms. Die von der Sensorgruppe gemessenen Daten dienen der Berechnung der Blatt-Luft-Dampfdruckdifferenz-(BLD) Daten und der Regelung der Durchblasung des Pflanzenbestandes.

Der mindestens eine Sensor (z.B. IR-Thermometer) zur Bestimmung der Blatttemperatur (Oberflächenthermometer) ist mit mindestens ein Mittel zur Fixierung bzw. Aufnahme von mindestens einem Pflanzenblatt kombiniert, wodurch eine berührungslose Messung der Oberflächentemperatur möglich ist. Das Mittel zur Blattaufnahme ist dabei austauschbar, um eine Anpassung an unterschiedliche Blattmorphologien zu gewährleisten.

In einer weiteren Ausführungsform sind die Sensoren des mindestens einen Sensorsystems an frei positionierbaren Gelenkarmen installiert, die wiederum an dem mindestens einen Anbautisch befestigt sind. Diese Konstruktion erlaubt eine flexible Positionierung der Sensoren in der Nähe der Pflanzenblätter.

Die Sensorgruppe kann zwischen mindestens zwei Pflanzen des Pflanzenbestandes auf dem Anbautisch vorgesehen sein. Generell können aber auch mehr als eine Sensorgruppe, z.B. zwei oder drei je nach Größe des Anbautisches und Art und Größe des Pflanzenbestandes bereitgestellt werden.

Die Sensoren erlauben die Messung der BLD in unmittelbarer Blattnähe. Um eine pflanzenphysiologisch ideale Anströmung einzelner Blätter und eine optimale Durchströmung des Pflanzenbestands zu erreichen und die Transpirationsleistung der Pflanzen im Optimum zu halten, ist es notwendig die BLD in unmittelbarer Blattnähe, in der, während der Transpiration entstehenden, Grenzschicht zu messen. Hierfür ist die Blatttemperatur, als wichtigem Richtwert für die Wasserdampfsättigung des pflanzlichen Blattes, Lufttemperatur, relative Luftfeuchte und Strömungsgeschwindigkeit zu messen. Die Ermittlung der Blatttemperatur erfolgt berührungslos mittels eines Infrarotthermometers. Um sicherzustellen, dass das exemplarisch für das Anbausystem gemessene Blatt seine Position zum Sensor nicht verändert, bspw. aufgrund von erhöhten Luftgeschwindigkeiten, kann dieses mittels einer Blattaufnahme gegenüber dem Sensor fixiert werden. Die Blattaufnahme ist austauschbar, so dass eine Anpassung an unterschiedliche Blattmorphologien erfolgen kann. Die Blattaufnahme verhindert eine Beschädigung des Blatts durch geeignete Polsterung und einstellbaren Druck.

Wie erwähnt, sind alle Sensoren zur Adaption an verschiedene pflanzliche Morphologien auf frei positionierbaren Gelenkarmen installiert. Der konstruktive Aufbau des Sensors sichert einen gleichmäßigen Abstand des Temperatursensors zum Blatt und liefert auf diese Weise valide Daten. Die Sensorgruppe ist so konzipiert, dass sie flexibel um Objekte beliebiger Form herum positioniert werden kann und die Oberflächentemperatur berührungslos misst.

Auf diese Weise kann die Blatttemperatur der auf dem System stehenden Pflanzen ebenso genau bestimmt werden, wie die herrschende Strömungsgeschwindigkeit und Lufttemperatur und -feuchte. Die mittels der Sensorgruppe gemessenen Daten fließen in die Berechnung der herrschenden BLD. Nach Bestimmung der Ist-Situation, wird durch Abgleich mit den als optimal hinterlegten BLD-Daten, das System die Durchblasung des Pflanzenbestands nach Strömungsgeschwindigkeit sowie die zu vorige Klimatisierung der Luft nach den Parametern Temperatur und Luftfeuchte regeln.

Das vorliegende Kultivierungssystem ermöglicht die Durchführung eines Verfahrens zur Kultivierung eines Pflanzenbestandes, wobei die Luftstromgeschwindigkeit des den Pflanzenbestand durchströmenden Luftstroms auf 0,3 - 5 m/s in Abhängigkeit von der arten- und phänotypischen Morphologie der pflanzlichen Blätter eingestellt wird.

Die einzustellenden Bereiche für Temperatur und Luftfeuchte ändern sich dabei in Abhängigkeit von den gemessenen Daten der vorherrschenden Luft und dienen der Klimatisierung hin zu einem Optimum. Dieses Optimum ist vom Phänotyp und vom Wachstumsstadium der Pflanze abhängig und damit vom Alter und der Größe der Pflanze.

Wie angeführt, liegt die einzustellende Luftstromgeschwindigkeit in Bereichen zwischen 0,3 und 5 m/s, wobei die Luftstromgeschwindigkeit in der Etablierungsphase des Pflanzenbestandes auf Werte zwischen 0,3 und 0,5 m/s und in der vegetativen Phase auf Werte zwischen 0,5 und 2 m/s geregelt wird. In der generativen Phase kann die Luftstromgeschwindigkeit variabel gestaltet sein.

In ähnlicher Weise variieren in den verschiedenen Wachstumsphasen die Werte für Temperatur, Prozesshelligkeit, CO₂-Gehalt der Luft und BLD.

So liegt die optimale Blatt-Luft-Dampfdruckdifferenz (BLD) in der Etablierungsphase des Pflanzenbestandes bei Werten zwischen 0,4 und 0,8 kPa, bevorzugt zwischen 0,5 und 0,7 kPa, in der vegetativen Phase zwischen 0,8 und 1,3 kPa, bevorzugt zwischen 0,9 und 1,2 kPa, und in der generativen Phase über 1,3 KPa, bevorzugt über 1,4 kPa.

Die Prozesshelligkeit (photosynthetisch aktive Strahlung) beträgt in der Etablierungsphase des Pflanzenbestandes in einem Bereich zwischen 400-600 µmol/m²/S, in der vegetativen Phase zwischen 600 und 900 µmol/m²/S und in der generativen Phase bei bis zu 1500 µmol/m²/S

In der generativen Phase des Pflanzenbestandes kann es auch sinnvoll sein, eine Bestrahlung mit zusätzlichen Wellenlängen zwischen 280 und 370 nm, bevorzugt zwischen 285 und 365 nm durchzuführen.

In einer Variante des vorliegenden Verfahrens wird der den Pflanzenbestand durchströmende Luftstrom mit gasförmigen Kohlendioxid (CO₂) angereichert. Der CO₂-Gehalt des Luftstroms variiert ebenfalls in Abhängigkeit von den Wachstumsphasen. So erfolgt in der Etablierungsphase eine CO₂-Anreicherung des Luftstromes nur, wenn der CO₂-Gehalt unter 400 ppm liegt. In der vegetativen Phase wird der CO₂-Gehalt des Luftstromes auf Werte zwischen 400 und 1000 ppm, bevorzugt zwischen 500 und 800 ppm und in der generativen Phase auf Werte zwischen 1000 und 2000 ppm, bevorzugt zwischen 1200 und 1600 ppm angehoben.

Die Temperatur schwankt zwischen 22°C und 28°C, wobei in der in der Etablierungsphase des Pflanzenbestandes Temperaturen von 22-23°C, in der vegetativen und generativen Phase 25-28°C eingestellt werden.

Das vorliegende Verfahren dient der Kultivierung von Pflanzen von der Etablierung eines Pflanzenbestands bis zu dessen Ernte. Sowohl die Etablierung als auch die Ernte können dabei zu unterschiedlichen phänotypischen Stadien erfolgen, so kann die Ernte bei bestimmten Pflanzenarten bereits in der vegetativen Phase erfolgen bei anderen in der generativen Phase.

Die vorliegende Erfindung wird im Folgenden anhand von mehreren Beispielen unter Bezugnahme auf die Figuren näher erläutert. Es zeigen:
- Figur 1: eine schematische Ansicht einer Ausführungsform des erfindungsgemäßen Kultivierungssystems
- Figur 2: eine schematische Darstellung des Durchströmungsprinzip des in Figur 1 gezeigten Kultivierungssystems;
- Figur 3: eine schematische Ansicht einer Ausführungsform einer im erfindungsgemäßen Kultivierungssystem verwendeten Sensorgruppe;
- Figur 4: eine schematische Ansicht der Positionierung der in Figur 3 dargestellten Sensorgruppe im Pflanzenbestand des Kultivierungssystems.

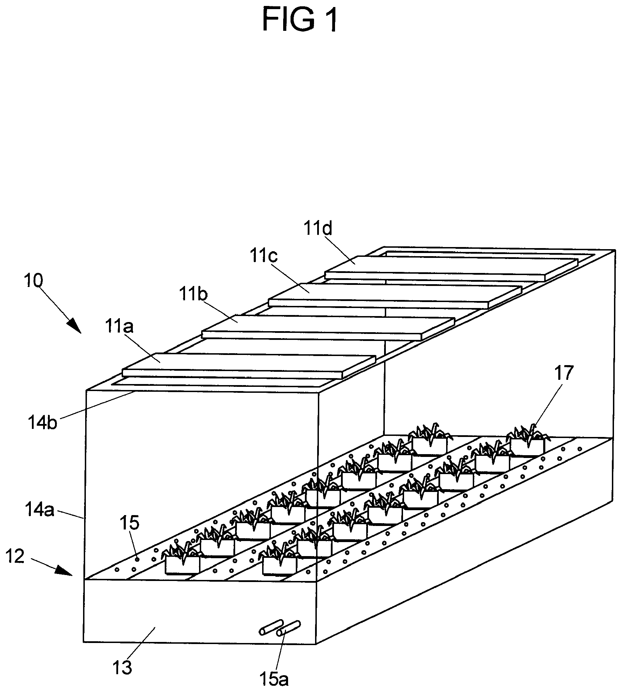

Figur 1 zeigt eine Ausführungsform des vorliegenden Kultivierungssystems. Das Kultivierungssystem 10 umfasst als wesentliche Bestandteile ein Anbausystem 12 bestehend aus einem Anbautisch 13 mit einer Tischplatte und einem an dem Anbautisch 13 angeordneten Ständersystem 14.

Das Ständersystem 14 besteht aus vier vertikal verlaufenden Balken 14a, die jeweils an den vier Ecken des rechtwinkligen Anbautisches 13 befestigt sind. Oberhalb des Anbautisches 13 sind jeweils vier horizontal verlaufende Balken 14b an den oberen Enden der vertikal verlaufenden Balken 14a angeordnet.

Das LED Beleuchtungssystem 11 bestehend aus mehreren parallel verlaufenden LED Modulen 11a-d ist oberhalb des Anbautisches 13 am Ständersystem 14 befestigt. Insbesondere sind die parallel verlaufenden LED Module 11a-d jeweils an den horizontal verlaufenden Balken 14b derart befestigt, so dass die LED Module 11a-d die gesamte Oberfläche des Anbautisches 13 überspannen und die von den LED Modulen erzeugte Strahlung die Oberfläche des Anbautisches 13 komplett abdecken kann.

In der Tischplatte des Anbautisches 13 sind Öffnungen 15 vorgesehen, durch die der Luftstrom von der Unterseite des Anbautisches zur Oberseite vertikal entlang des sich auf der Tischplatte befindlichen Pflanzenbestandes 17 geführt wird.

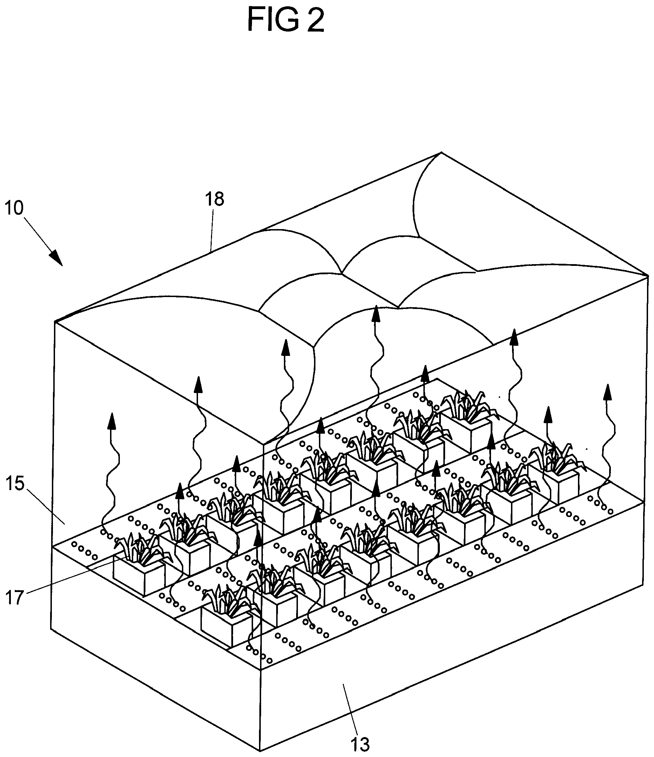

In Figur 2 ist dieses Durchströmungsprinzip detaillierter dargestellt. Der Luftstrom wird durch die Öffnungen 15 weg von der Tischplatte des Anbautisches 13 nach oben entlang des Pflanzenbestandes 17 geführt, so das eine homogene An- und Durchströmung der Pflanzenblätter des Pflanzenbestandes 17 ermöglicht wird. Die Luftstromstärke wird durch Lüfter gesteuert, so dass die Luftstromgeschwindigkeit in einem Bereich von 0,3-5 m/s liegt.

Oberhalb des Pflanzenbestandes 17 ist eine Absaugvorrichtung 18 (in Figur 2 schematisch angedeutet) vorgesehen. Die Absaugvorrichtung 18 saugt den durch den Pflanzenbestand geleiteten Luftstrom ab und führt die verbrauchte Luft in eine geeignete Klimatisierung-und Desinfektionsanlage ab, so das eine Wiederverwendung der Luft ermöglicht wird.

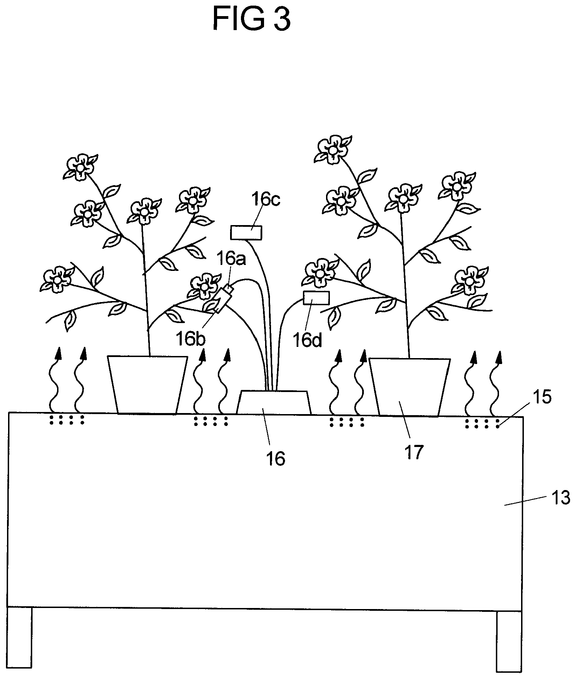

Das vorliegende Kultivierungssystem umfasst ein Sensorsystem 16 mit verschiedenen Sensoren zur Bestimmung von pflanzenphysiologischen Parametern des Pflanzenbestandes. Das in Figur 3 gezeigte Sensorsystem 16 weist ein Thermometer 16a zur Bestimmung der Blatttemperatur (Oberflächenthermometer) auf, welches mit einem Aufnahmemittel 16b für ein Pflanzenblatt kombiniert ist, so das eine berührungslose Messung der Oberflächentemperatur des Pflanzenblattes möglich ist. Das Blattaufnahmemittel 16b ist an unterschiedliche Blattmorphologien anpassbar. Des Weiteren weist das Sensorsystem 16 einen Lufttemperatursensor/Luftfeuchtesensor 16c und einen Sensor (Anemometer) 16d zur Messung der Luftstromgeschwindigkeit auf.

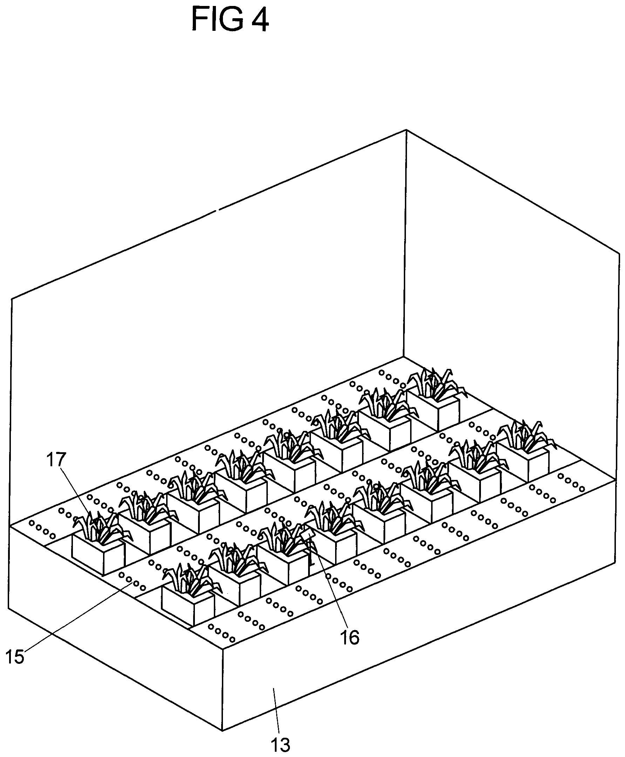

Die Sensorgruppe 16 kann zwischen mindestens 2 Pflanzen des Pflanzenbestandes 17 auf dem Anbautisch angeordnet sein (siehe Figuren 3 und 4).

### Ausführungsbeispiel: Kultivierung von Cannabis sativa

Der Pflanzenbestand wird mit Jungpflanzen gleicher phänologischer Einstufung auf dem erfindungsgemäßen Kultivierungssystem etabliert. Das beschriebene System ist mit verschiedensten Topf- bzw. Containergrößen oder anderen Anbausystemen, wie Steinwolle-Behältern, kompatibel.

Ziel der Cannabis-Kultivierung ist ein hoher Ertrag an Cannabinoiden, welche aus den Blüten der Cannabis-Pflanze gewonnen werden. Die Prozessführung ist deshalb auf einen hohen Blütenertrag hin optimiert.

Die Etablierung des Pflanzenbestands erfolgt mit Jungpflanzen, die vegetativ oder generativ vermehrt worden sein können, bei einer Temperatur von 22° C mit einem optimalen BLD von 0,42 bis 0,75 kPa. Die Klimatisierung richtet sich nach den in der Tabelle angegebenen Werten, mit dem Ziel der Stabilisierung der Temperatur und der BLD. Die Strömungsgeschwindigkeit wird auf Werte zwischen 0,3 bis 0,5 m/s geregelt. Eine Anreicherung der verwendeten Luft mit Kohlenstoffdioxid erfolgt noch nicht, wenn diese einen Wert von 400 ppm nicht unterschreitet. Die Prozesshelligkeit beträgt in der Etablierungsphase zwischen 400 und 600 µmol/m²/S photosynthetisch aktiver Strahlung. Die Angabe von Näherungswerten ist notwendig, weil diese sortenspezifisch verschieden sind.

Im Anschluss an die Etablierung, die sortenspezifisch verschieden lang sein kann, erfolgt der Übergang in die vegetative Phase. Ziel dieser Phase ist das Erreichen einer phänologisch idealen Größe vor Erreichen der Blüte. In dieser Phase stehen der Biomassezuwachs und der morphologische Aufbau der Pflanzen im Mittelpunkt des Prozessziels. In Abhängigkeit vom Kulturziel und seiner Erreichung kann diese Phase auch von Erziehungsmaßnahmen der Pflanzen geprägt sein. So existieren verschiedene Methoden zur Erziehung der Cannabis-Pflanzen, die den Blütenertrag erhöhen sollen, wie Schnittmaßnahmen oder Methoden der Erziehung an einem Spalier.

Diese Methoden haben direkten Einfluss auf die zu erzielende Strömungsgeschwindigkeit der Luft, die bei dichteren Beständen erhöht werden muss. Allgemein können folgende optimale Werte angegeben werden: Lufttemperaturen zwischen 25,5° und 27,5° C bei einer BLD zwischen 0,85 und 1,18 kPa. Die Strömungsgeschwindigkeit der Luft ist stark vom morphologischen Habitus abhängig und sollte mit Zunahme der Blattmasse und der erfolgten Erziehungsmaßnahme allmählich angehoben werden und liegt zwischen 0,5 und 2 m/s. Zur Erzielung einer hohen Photosyntheserate während dieser Phase ist das Anheben des Kohlenstoffdioxidgehalts in der Luft notwendig. Hierbei sind Werte von 400 - 800 ppm Kohlenstoffdioxid-Gehalt in der Luft notwendig, die parallel zur Erhöhung der Lichtintentsität erfolgen. Die Prozesshelligkeit photosynthetisch aktiver Strahlung wird zwischen 600 bis 900 µmol/m²/S angehoben. Da alle angegebenen Werte von verschiedenen Anbaufaktoren, wie bspw. der Erziehung der Pflanzen abhängig sind, können nur Näherungswerte angegeben werden.

Die generative Phase wird bei manchen Cannabis-Kreuzungen durch die Tageslänge induziert andere Kreuzungen mit *Cannabis ruderalis* beginnen den Eintritt in die generative Phase tageslängenunabhängig. In Abhängigkeit von der verwendeten Kreuzung oder Sorte muss die Applikationsdauer der Prozesshelligkeit auf 12 Stunden verkürzt werden.

Sowohl die Prozesshelligkeit und der Kohlenstoffdioxidgehalt werden für die generative Phase angehoben. Die Prozesshelligkeit steigt auf Werte bis zu 1500 µmol/m²/s, der Kohlenstoffdioxidgehalt der Luft wird auf 1200 bis 1600 ppm angehoben. Zusätzlich werden mit der generativen Phase zusätzliche Wellenlängen genutzt. Die gesamte generative Phase über wird, periodisch begrenzt, eine zusätzliche Bestrahlung mit den Wellenlängen 285 nm und 365 nm durchgeführt. Der hierdurch verursachte Lichtstress regt die Cannabinoid-Produktion der Pflanzen an. Die Wellenlänge 365 nm verstärkt hierbei die Wirkung der ursächlichen 285 nm, welche den UVR8-Proteinkomplex adressiert, dessen Anregung in einer Stressreaktion mündet, die eine Steigerung des Cannabinoidgehalts zur Folge hat. Um einen homogenen Lichtstress zu induzieren kann die Bestandsbeleuchtung zusätzlich eingesetzt werden. Die generative Phase wird durch die Temperaturführung optimiert. Einer zeitlich begrenzten Anhebung auf 28° C folgt eine allmähliche Absenkung auf 25° C. Neben der Lichtstressinduktion kann zum Ende hin eine Absenkung der Luftfeuchtigkeit zur Akkumulation von Wirkstoffen in der Blüte beitragen. Eine Absenkung auf unter 45 % relative Luftfeuchtigkeit bei einer Temperatur von 25° C führt zu einer idealen BLD von 1,38 kPa. Mit Abschluss dieser Phase kann die Ernte beginnen. Das Erreichen des optimalen Blühzustands ist sortenspezifisch verschieden und von der verwendeten Anbaumethode abhängig und kann über 60 Tage betragen.

Neben der Kultivierung von medizinalen Nutzpflanzen (wie *Cannabis sativa*) können auch andere Pflanzenarten verwendet werden.

## Patentansprüche

1. Kultivierungssystem für einen Pflanzenbestand umfassend
- mindestens ein LED-Beleuchtungssystem umfassend Breitband-LEDs zur Emission von Sonnenlicht im photosynthetischen Bereich mit einer Wellenlänge zwischen 400-700 nm;
- mindestens ein Anbausystem umfassend mindestens einen Anbautisch und einem an dem Anbautisch angeordneten Ständersystem, wobei das LED-Beleuchtungssystem oberhalb des Anbautisches an dem Ständersystem befestigt ist,
- mindestens eine regelbare Luftstromeinrichtung zur Steuerung einer Luftstromzufuhr zur An- und Durchströmung des Pflanzenbestandes, und
- mindestens ein Sensorsystem zur Bestimmung von pflanzenphysiologischen Parametern des Pflanzenbestandes.

2. Kultivierungssystem nach Anspruch 1, **dadurch gekennzeichnet, dass** das mindestens eine LED-Beleuchtungssystem ein homogenes hochintensives photosynthetisch aktives Lichtes mit einer aktiven Photonenflussdichte (PPFD) von mehr als 2500 µmol/m²/S erzeugt.

3. Kultivierungssystem nach einem der vorhergehenden Ansprüche, **dadurch gekennzeichnet, dass** das mindestens eine LED-Beleuchtungssystem zusätzliche LEDs zur Emission von UV-Licht mit einer Wellenlänge zwischen 265 - 400 nm aufweist.

4. Kultivierungssystem nach einem der vorhergehenden Ansprüche, **dadurch gekennzeichnet, dass** das mindestens eine LED-Beleuchtungssystem zusätzliche LEDs zur Emission von IR-Licht mit einer Wellenlänge zwischen 700-900 nm aufweist.

5. Kultivierungssystem nach einem der vorhergehenden Ansprüche, **dadurch gekennzeichnet, dass** das LED-Beleuchtungssystem mindestens ein LED-Modul, bevorzugt mindestens zwei oder mehrere parallel zueinander verlaufende LED-Module umfasst.

6. Kultivierungssystem nach einem der vorhergehenden Ansprüche, **dadurch gekennzeichnet, dass** das LED-Beleuchtungssystem horizontal oberhalb des Anbautisches angeordnet ist.

7. Kultivierungssystem nach einem der vorhergehenden Ansprüche, **gekennzeichnet durch** eine vertikale LED-Beleuchtung.

8. Kultivierungssystem nach einem der vorhergehenden Ansprüche, **dadurch gekennzeichnet, dass** das LED-Beleuchtungssystem mit mindestens einem Kühlsystem verbunden ist.

9. Kultivierungssystem nach einem der vorhergehenden Ansprüche, **dadurch gekennzeichnet, dass** die Luftstromzufuhr durch auf bzw. im Anbautisch vorgesehene Öffnungen als Luftführungsmittel erfolgt.

10. Kultivierungssystem nach einem der vorhergehenden Ansprüche, **gekennzeichnet durch** mindestens ein Mittel zur Steuerung der Luftstromstärke, mindestens ein Mittel zur Einstellung der relativen Luftfeuchte des Luftstromes und/oder mindestens ein Mittel zur Anreicherung des Luftstromes mit gasförmigen Kohlendioxid.

11. Kultivierungssystem nach einem der vorhergehenden Ansprüche, **dadurch gekennzeichnet, dass** oberhalb des Pflanzenbestandes mindestens ein Mittel zum Absaugen des durch den Pflanzenbestand geleitenden Luftstroms vorgesehen ist.

12. Kultivierungssystem nach einem der vorhergehenden Ansprüche, **dadurch gekennzeichnet, dass** das mindestens eine Sensorsystem mindestens ein Sensor zur Bestimmung der Blatttemperatur mit mindestens ein Mittel zur Aufnahme von mindestens einem Pflanzenblatt, mindestens ein Lufttemperatursensor, mindestens ein Luftfeuchtesensor und/oder mindestens Anemometer zur Messung des Strömungsgeschwindigkeit umfasst.

13. Kultivierungssystem nach einem der vorhergehenden Ansprüche, **dadurch gekennzeichnet, dass** das mindestens eine Sensorsystem frei positionierbare Gelenkarm umfasst, die an dem mindestens einen Anbautisch befestigt sind.

14. Verfahren zur Kultivierung eines Pflanzenbestandes in einem Kultivierungssystem nach einem der vorhergehenden Ansprüche, **dadurch gekennzeichnet, dass** die Luftstromgeschwindigkeit des den Pflanzenbestand durchströmenden Luftstroms auf 0,3 - 5 m/s in Abhängigkeit von der arten- und phänotypischen Morphologie der pflanzlichen Blätter eingestellt wird.

15. Verfahren nach Anspruch 14, **dadurch gekennzeichnet, dass** der den Pflanzenbestand durchströmende Luftstrom mit gasförmigen Kohlendioxid (CO₂) angereichert wird.
